(19) Europäisches Patentamt / European Patent Office / Office européen des brevets

(11) **EP 2 891 009 B1**

(12) **EUROPEAN PATENT SPECIFICATION**

(45) Date of publication and mention
of the grant of the patent:
**14.09.2016 Bulletin 2016/37**

(51) Int Cl.:
*G02B 27/64* *(2006.01)*   *F41H 5/26* *(2006.01)*
*H04N 5/225* *(2006.01)*   *F41G 11/00* *(2006.01)*

(21) Application number: **13756383.9**

(22) Date of filing: **26.08.2013**

(86) International application number:
**PCT/EP2013/067608**

(87) International publication number:
**WO 2014/033082 (06.03.2014 Gazette 2014/10)**

(54) **VISION SYSTEM WITH VIDEO CAMERA AND SYSTEM FOR REDUCING STRESSES**

VIDEOSYSTEM MIT VIDEOKAMERA UND SYSTEM ZUR STRESSMINDERUNG

SYSTÈME DE VISION DOTÉ D'UNE CAMÉRA VIDÉO ET SYSTÈME PERMETTANT DE RÉDUIRE DES CONTRAINTES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.08.2012 IT FI20120173**

(43) Date of publication of application:
**08.07.2015 Bulletin 2015/28**

(73) Proprietor: **SELEX ES S.p.A.**
**00195 Roma (IT)**

(72) Inventors:
• **MAGI, Andrea**
  **I-00187 Roma (IT)**
• **SOTTANI, Leonardo**
  **I-00187 Rome (IT)**
• **GALANTI, Marco**
  **I-00187 Roma (IT)**

(74) Representative: **Mannucci, Michele et al**
**Ufficio Tecnico**
**Ing. A. Mannucci S.r.l.**
**Via della Scala, 4**
**50123 Firenze (IT)**

(56) References cited:
WO-A2-2009/035735    US-A- 5 710 945
US-A1- 2006 216 019    US-A1- 2008 087 784

**Description**

Technical Field

The present invention relates to opto-electronic vision and/or sighting systems. More in particular, the present invention concerns opto-electronic systems or apparatus comprising a video camera for observing a scene, mounted on a structure subject to dynamic stresses, such as a self-propelled vehicle.

State of the art

Modem opto-electronic vision and sighting devices have indirect vision capabilities, i.e. they produce a video of the scene or view that can be presented to the operator on a monitor. The video, whether analog or digital, is filmed through a video camera having a CCD module and suitable optical focusing elements, in particular an objective. This opto-electronic unit must allow the production of fields of view compatible with the operating requirements and the position of the optical axis to be maintained stable, to ensure adequate sighting precision both when the field of view varies, and when the temperature conditions vary. It is also necessary for the system to maintain the position of the optical axis stable during and after exposure of the system to mechanical stresses of dynamic type transmitted for example by the vehicle or other self-propelled means on which the system is installed, stresses that can derive from the motion of the vehicle or from the operation of parts present thereon. Moreover, the video camera module and the optical parts thereof must not be subject to malfunctions during and after exposure of the system to the aforesaid mechanical stresses.

Systems exist for damping dynamic stresses on video camera and focusing optics assemblies dedicated to particular uses, which have very high costs.

Other simpler and less expensive systems currently available do not provide the performances required in some applications.

US2006/01216019 discloses an imaging device assembly for a military applications, comprising a housing and an imaging device mounted to the housing. The housing is construcgted and arranged in a manner that absorbs or dampens a shock or vibrations to minimize fresulting damage to the imaging device.

Consequently, there is the need to provide a vision and/or sighting system comprising a video camera, which is adapted to be installed, for example, on a self-propelled vehicle subjected to dynamic stresses of various kind, in particular such as to cause displacements parallel to the optical axis of the video camera, which has suitable technical-functional and performance characteristics but limited costs.

SUMMARY OF THE INVENTION

The object of some embodiments of the subject matter disclosed herein is to prevent breakages or malfunctions (such as loss of focus) and to maintain stable the position of the optical axis of a commercial TV assembly, i.e. a commercial video camera, in relation to environmental, temperature and mechanical stress conditions, typically of dynamic kind, to which the system is subjected when it is mounted, for example, on a self-propelled vehicle.

According to one aspect, there is provided a vision and/or sighting system comprising: a video camera with an optical axis; an internal frame containing the video camera; and an external frame in which the internal frame is supported; wherein: between the external frame and the internal frame members are arranged for reducing mechanical stresses transmitted by the external frame to the internal frame and therefore for reducing accelerations transmitted by the external frame to the internal frame.

The external frame and the internal frame are arranged to slide with respect to one another in a direction parallel to the optical axis of the video camera carried by the internal frame. Mutual sliding systems between external frame and internal frame reduce the mechanical stress transmitted by the external frame to the internal frame in the direction of the optical axis and therefore reduce acceleration of the internal frame with respect to the external frame along said direction.

In practice, said internal frame is supported in the external frame so as to be able to translate along a direction parallel to the optical axis of said video camera. A return mechanism of the internal frame toward an intermediate position of stable equilibrium of the internal frame with respect to the external frame is also provided.

In practice, with a system of this type, if a dynamic stress that causes an acceleration of the external frame in the direction of the optical axis of the video is imparted on the external frame (which can be rigidly constrained to a component of a self-propelled vehicle), a substantially lower stress, and therefore a substantially lower acceleration, is transmitted to the internal frame and to the video camera.

In practical embodiments, the members for reducing mechanical stresses comprise shock absorbers between the external frame and the internal frame, configured and arranged to absorb the shock between the internal frame and the external frame, when the internal frame translates too far with respect to the external frame along the direction parallel to the optical axis of the video camera. The shock absorbers in practice form limit stops to limit the relative displacement between external frame and internal frame in the direction of the optical axis of the video camera. This is an operating condition that is not normal and must be avoided. In any case, the shock absorbers allow damages resulting from the occurrence of this abnormal condition to be avoided or reduced. The shock absorbers can be elastic, or visco-elastic systems, or comprise or be formed by components made of rubber or other soft material capable of dissipating the kinetic energy of the shock between external frame and internal frame. Preferably, the shock absorbers are fixed to the external frame, although it would also be possible to constrain them to the internal frame.

In practical embodiments, in the position of stable equilibrium the internal frame is spaced from the shock absorbers, which are positioned in front of and behind the internal frame with respect to the direction of the optical axis of the video camera.

According to the invention, the return mechanism comprises a pressure member, preferably a pressure roller, elastically stressed against a surface with double inclination. In a possible configuration, the pressure member or pressure roller is constrained to the external frame and the surface with double inclination is constrained to the internal frame. In other embodiments, the arrangement can be reversed, with the pressure member or pressure roller supported by the internal frame and the surface with double inclination fixed to the external frame. The first configuration, with the external frame constrained to the pressure member or pressure roller, is preferable for reasons of mechanical construction and dimensions.

In practice, the surface with double inclination can be substantially V-shaped, in the position of stable equilibrium the pressure roller being positioned in the vertex of the V-shaped surface. The surface with double inclination can have two flat surface portions, i.e. two inclined planar surfaces converging toward the vertex of the V. It would also be possible to provide the two portions of the surface with double inclination with a different shape, for example concave or convex, with a variable inclination, but always such that as a whole they define a surface with two portions having two substantially opposite inclinations.

The pressure member or pressure roller and the surface with double inclination are arranged so as to stress the internal frame against a sliding surface of the external frame, for example as a result of one or more elastic members that elastically bias the support shaft of the pressure roller.

The pressure roller is advantageously mounted idle.

In advantageous embodiments, the external frame and the internal frame comprise sliding surfaces of the internal frame on the external frame, configured to enable sliding of the internal frame with respect to the external frame parallel to the optical axis of the video camera. Preferably, members are provided for adjusting the friction force between the external frame and the internal frame. These members can comprise elastic devices and adjustable preload members of the elastic devices.

In some advantageous embodiments, one or more sliding shoes are interposed between the external frame and said internal frame, configured and arranged to enable sliding of the internal frame with respect to the external frame parallel to the optical axis of the video camera. The sliding shoes can advantageously be associated with elastic members that generate an elastic thrust of the sliding shoes against respective sliding surfaces. The elastic members are preloaded and the preload can be adjustable, to vary and adjust the friction force between external frame and internal frame. This friction force is adjusted so as to enable mutual movement of the two internal and external frames when the external frame is dynamically stressed, for example with acceleration parallel to the optical axis of the video camera above a predetermined value. The friction between the two frames is nonetheless adjusted so as to enable return of the internal frame in the position of stable equilibrium with respect to the external frame following a displacement due to application of a high dynamic stress to the external frame.

Features and embodiments are disclosed here below and are further set forth in the appended claims, which form an integral part of the present description. The above brief description sets forth features of the various embodiments of the present invention in order that the detailed description that follows may be better understood and in order that the present contributions to the art may be better appreciated. There are, of course, other features of the invention that will be described hereinafter and which will be set forth in the appended claims. In this respect, before explaining several embodiments of the invention in details, it is understood that the various embodiments of the invention are not limited in their application to the details of the construction and to the arrangements of the components set forth in the following description or illustrated in the drawings. The invention is capable of other embodiments and of being practiced and carried out in various ways. Also, it is to be understood that the phraseology and terminology employed herein are for the purpose of description and should not be regarded as limiting.

As such, those skilled in the art will appreciate that the conception, upon which the disclosure is based, may readily be utilized as a basis for designing other structures, methods, and/or systems for carrying out the several purposes of the present invention. It is important, therefore, that the claims be regarded as including such equivalent constructions insofar as they do not depart from the spirit and scope of the present invention.

BRIEF DESCRIPTION OF THE DRAWINGS

The present invention will be better understood by following the description and accompanying drawing, which shows non-limiting practical embodiments of the invention. More in particular, in the drawing:

Figs.1A and 1B show a schematic diagram in two sections, Fig.1A being a section according to the line $I_A$-$I_A$ of Fig. 1B and Fig.1B being a section according to the line $I_B$-$I_B$ of Fig.1A;

Fig.2 shows an axonometric view of a system in a practical embodiment;

Fig.3 shows a front view of the system of Fig.2;

Fig.4 shows a section according to the line IV-IV of Fig. 3;

Fig.5 shows a section according to V-V of Fig.4;

Fig.6 is a local cross section according to VI-VI of Fig.3; and

Figs. 7 and 8 are diagrams of dynamic stresses measured on the system in a test phase.

DETAILED DESCRIPTION OF EMBODIMENTS OF THE INVENTION

The following detailed description of the exemplary embodiments refers to the accompanying drawings. The same reference numbers in different drawings identify the same or similar elements. Additionally, the drawings are not necessarily drawn to scale. Also, the following detailed description does not limit the invention. Instead, the scope of the invention is defined by the appended claims.

Reference throughout the specification to "one embodiment" or "an embodiment" or "some embodiments" means that the particular feature, structure or characteristic described in connection with an embodiment is included in at least one embodiment of the subject matter disclosed. Thus, the appearance of the phrase "in one embodiment" or "in an embodiment" or "in some embodiments" in various places throughout the specification is not necessarily referring to the same embodiment(s). Further, the particular features, structures or characteristics may be combined in any suitable manner in one or more embodiments.

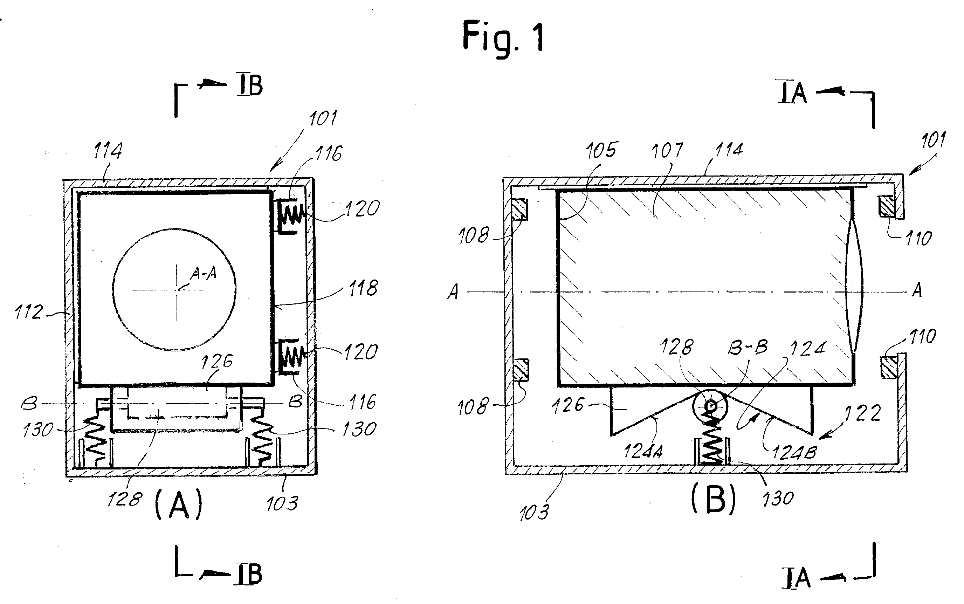

Referring to Figs.1A and 1B, a schematic diagram will be illustrated for a better understanding of the operation of the system forming the subject matter of the present description. In Figs.1A and 1B the vision system is indicated as a whole with 101. It comprises an external frame 103 and an internal frame 105. A video camera 107 is fixed in the internal frame 105, A-A indicatindicating the optical axis of the video camera. The internal frame 105 is housed in the external frame 107 in a floating manner, and in particular so as to be able to translate in a direction parallel to the optical axis A-A of the video camera 107. Shock absorbers are fixed to the external frame, forming limit stops for the internal frame 105. In the diagram of Figs.1A and 1B, the shock absorbers are indicated with 108 and 110 and are carried by the external frame 103. In other embodiments the shock absorbers can be fixed to the internal frame 105.

Reference numbers 112 and 114 indicate surfaces for contact and mutual sliding between the internal frame and the external frame. Sliding shoes 116 co-acting with sliding surfaces 118 provided on the internal frame 105 are arranged on one side of the video camera 107. The sliding shoes 116 are elastically pressed by springs 120 that can, if necessary, be adjustable to adjust the force that the sliding shoes 116 exert on the internal frame 105 and consequently the friction generated on the contact surfaces between internal frame 105 on one side and external frame 103 and sliding shoes 116 on the other.

A return mechanism is further provided, which carries the internal frame 105 into an intermediate position of stable equilibrium with respect to the external frame 103. In this schematic diagram the return mechanism, indicated as a whole with 122, comprises a surface 124 having a double inclination. By way of example, the surface with double inclination 124 comprises two flat surface portions 124A and 124B in the shape of an upside down V and provided on a block 126 fixed to the internal frame 105. Pressing on the surface with double inclination 124 is a pressure roller 128 with a rotation axis B-B oriented at 90° with respect to the optical axis A-A of the video camera 107. The roller 128 is mounted idle and is elastically biased against the surface with double inclination 124. In the diagram of Figs. 1A, 1B coil springs 130 biasing the roller 128 against the surface 124 are schematically shown.

The elastic force with which the pressure roller 128 is pressed on the surface with double inclination 124 generates a thrust parallel to the optical axis A-A each time the internal frame 105 shifts from the rest position (Fig.1B) in the direction of the optical axis A-A. This thrust overcomes the friction force between the external frame and the internal frame and returns the internal frame 105 into the intermediate position of rest or of stable equilibrium of Fig.1B, where the pressure roller 128 is located in the vertex of the overturned V formed by the surface with double inclination 124.

In this way, a system to reduce the acceleration is obtained, which at least partly isolates the internal frame 105 from the external frame 103. The vibrations or oscillations applied to the external frame 103 in the direction of the optical axis A-A are only partly transmitted to the internal frame 105. The return mechanism 122 ensures that the internal frame 105 always returns to the position of maximum distance from the limit stop shock absorbers 108, 110.

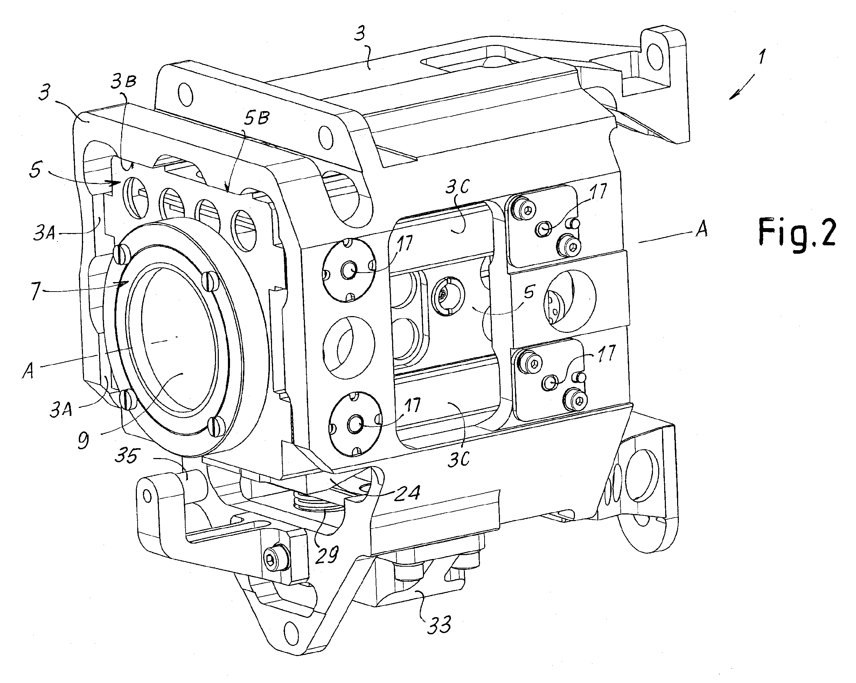

The subsequent Figs. 2 to 6 show a practical embodiment of the schematic diagram described with reference to Figs. 1A and 1B.

In the embodiment illustrated in Figs.2 to 6, the vision system is indicated as a whole with 1. The vision system 1 comprises an external frame 3 in which an internal frame 5 is housed. A video camera 7 is in turn housed in the internal frame 5. The term video camera is intended as any opto-electronic sensor or apparatus capable of filming a scene through an appropriate optic and of supplying electronic output signals that enable, through an image reproduction system, reproduction of the detected scene, possibly a dynamic scene, i.e. a film, on a monitor, display or the like.

The video camera 7 can be a video camera of commercial type and will not be described in detail. The objective of the video camera 7 is indicated with 9 and its optical axis is indicated with A-A.

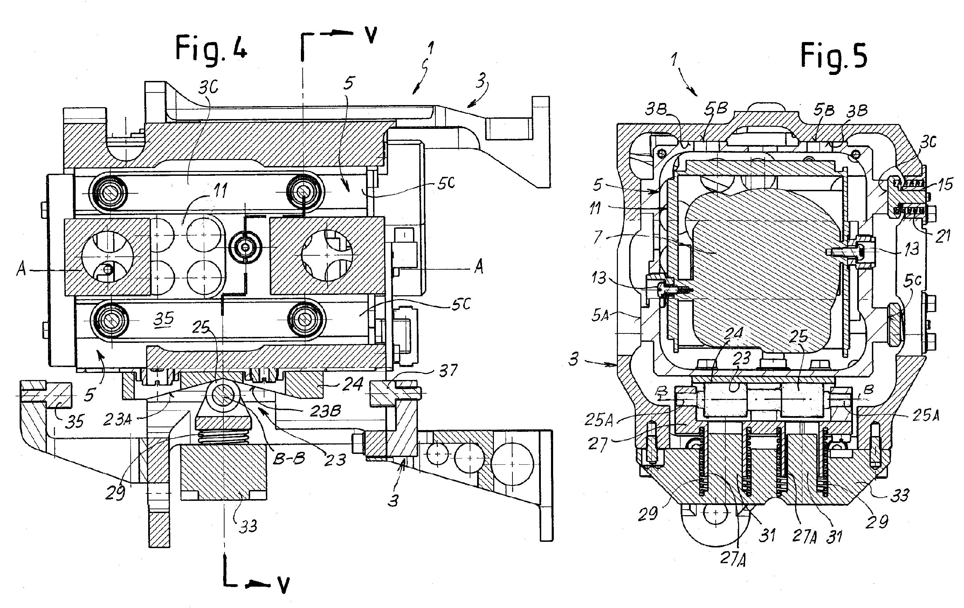

The video camera 7 is rigidly constrained to the internal frame 5, for example through a dedicated structure indicated with 11, with which the video camera 7 is equipped. In Fig.5, screws are indicated by way of example with 13, for fixing the structure 11 to support the video camera 7 to the internal frame 5.

The internal frame 5 (Fig 5) is surrounded by the external frame 3 and is in contact therewith at a plurality of sliding surfaces. More in particular, the frame 5 is provided with three pairs of sliding surfaces indicated with 5A, 5A on one side, 5B, 5B on a second side and with 5C, 5C on a third side, the surfaces 5A being coplanar, parallel to the coplanar surfaces 5C and orthogonal to the coplanar surfaces 5B. Correspondingly, the external frame 3 comprises sliding surfaces 3A, in sliding contact with the surfaces 5A, surfaces 3B, in sliding contact with the surfaces 5B, and a pair of sliding shoes 3C, in sliding contact with the surfaces 5C of the internal frame 5.

In the illustrated embodiment, the two shoes 3C extend longitudinally in a direction parallel to the optical axis A-A of the video camera 7.

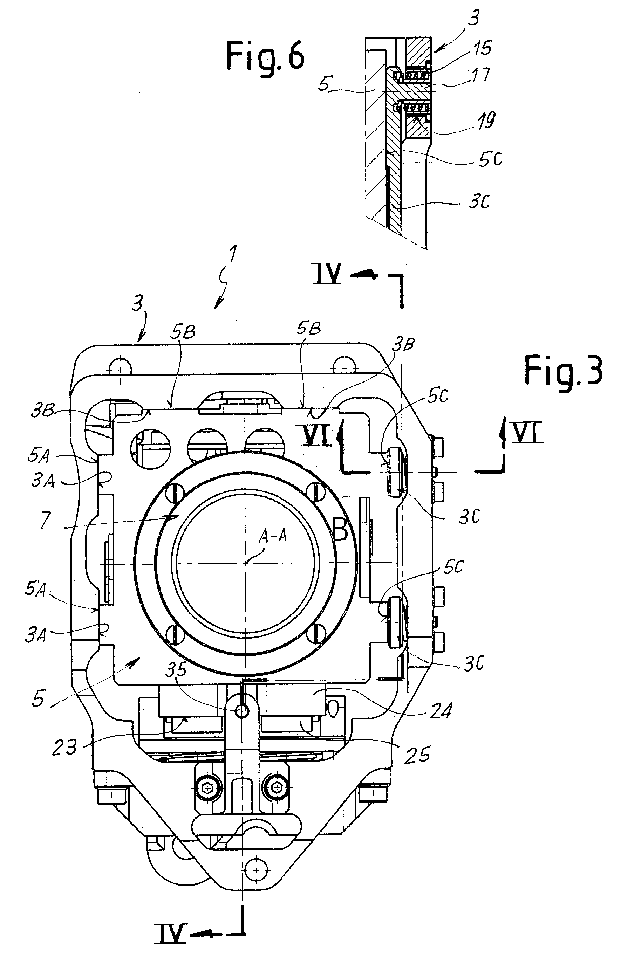

As can be observed in Figs.5 and 6, each sliding shoe 3C is elastically pressed by elastic members that generate a thrust of the sliding shoes against the sliding surfaces 5C of the internal frame 5. More in particular, in the illustrated example, each shoe 3C is stressed by a pair of elastic members, for example a pair of compression coil springs, indicated with 15. The compression springs 15 are advantageously arranged in proximity of the two opposed longitudinal ends of each shoe 3C.

Advantageously, each compression coil spring 15 surrounds a pin 17 extending from the sliding shoe 3C orthogonal to the sliding surface defined thereby. The pins 17 of each shoe are housed in through holes or through seats of the external frame 3, indicated with 19 (see in particular Fig.6).

Members, indicated generically with 21, for adjusting and blocking the springs can be inserted and engaged in the seats 19. The members 21 can, for example, be screw members that engage in threads provided in the seats 19, with suitable blocking means to adjust the compression force of the springs 15 and consequently the pressure with which each sliding shoe 3C presses on the corresponding sliding surface 5C of the internal frame 5.

The compression force of the springs 15 also generates a contact force between the sliding surfaces 5A of the internal frame and the sliding surfaces 3A of the external frame located on the opposite side of the system with respect to the position of the sliding shoes 3C.

On the opposite side with respect to the sliding surfaces 5B of the internal frame 5, there is provided a return mechanism of the internal frame 5 to an intermediate position of stable equilibrium with respect to the external frame 3. In the embodiment illustrated in the drawing, this return mechanism comprises a surface with double inclination (see in particular Fig.3), indicated as a whole with 23 and provided on a block 24 fixed to the internal frame 5, in the example illustrated on the surface thereof opposite to the sliding surface 5B.

In this embodiment the surface with double inclination 23 is V-shaped with two surface portions 23A and 23B inclined in opposite directions and symmetrically with respect to a median plane, orthogonal to the optical axis A-A and passing through the vertex of the V formed by the surfaces 23A, 23B.

A transverse pressure roller 25 is pressed against the surface with double inclination 23, said pressure roller being supported idle on a transverse axis B-B, oriented at 90° with respect to the optical axis A-A of the video camera 7.

In the embodiment shown in Figs. 2 to 6, see in particular Fig.4, the pressure roller 25 is supported by a moving element 27, by means of two end pins 25A. Rolling or friction bearings can be arranged on said end 25A to reduce the friction between said ends 25A and the moving element 27.

The transverse roller 25 is elastically biased against the surface with double inclination 23, with a force orthogonal to the axes A-A and B-B. In the illustrated embodiment the force that biases the transverse roller 25 against the surface with double inclination 23 is generated by two elastic members 29, for example two compression springs. To obtain correct guiding of the moving element 27 and therefore of the transverse pressure roller 25, in the illustrated embodiment the moving element 27 comprises two guide bushings 27A, which are fitted on two cylindrical guide bars 31 fixed to the external frame 3, for example forming an integral part of a cross member 33. In the illustrated embodiment the elastic members 29 are in the form of compression coil springs arranged around the guide bushings 27A, so as to react between the cross member 33 and the moving element 27.

With this arrangement, the elastic force exerted by the transverse pressure roller 25 against the surface with double inclination 23 tends to maintain the internal frame 5 in a position of stable equilibrium, shown in particular in Fig. 4, wherein the transverse pressure roller 25 is located in the vertex of the overturned V formed by the two portions 23A, 23B with opposite inclinations of the surface with double inclination 23. When the internal frame 5 with the video camera 7 mounted integral therein tends to shift from this position of equilibrium, following a dynamic stress having a component parallel to the axis A-A of the video camera, the longitudinal component of the elastic force of the springs 29 tends to return the internal frame 5 to the position of stable equilibrium, as a result of the thrust applied by the pressure roller 25 on the surface with double inclination 23.

Advantageously, shock absorbers arranged between the external frame 3 and the internal frame 5, which damp any mutual shocks between the external frame and the internal frame. In the illustrated embodiment, two shock absorbers 35 and 37 are provided. In the illustrated example the shock absorbers 35, 37 are integral with the external frame 3 and are positioned so as to absorb the shocks deriving from displacements of the internal frame 5 with respect to the external frame 3 along the optical axis A-A. The shock absorbers can be made of soft material, such as rubber, or can comprise elastic elements, if necessary combined with damping systems. In any case, the system will advantageously be sized so that the internal frame never impacts against the aforesaid absorbers, except in exceptional conditions.

In the illustrated embodiment the shock absorbers 35 and 37 are positioned under the optical axis A-A, at the height of the block 24 on which the surface with double inclination 23 is provided, so as to act against the block 24. In this way the position of the shock absorbers 35 and 27 can be central, i.e. lying on the median plane containing the optical axis A-A of the video camera 7 and do not interfere with said optic.

The system thus configured can be installed, for example, on a self-propelled vehicle subject to dynamic stresses due to its movement and/or to the operation of elements and devices on board the same vehicle, for example projectile launching systems. The external frame 3 is normally fixed with respect to the self-propelled vehicle, or to a part thereof that participates in the movement of the vehicle. A dynamic stress in the direction of the optical axis A-A applied to the external frame 3 tends to cause a shifting of the external frame 3 with respect to the internal frame 5 along the direction A-A of the optical axis of the video camera 7. If this stress is too large, it can cause the frame 5 to impact against one or the other of the shock absorbers 35, 37. When the internal frame 5 with the video camera 7 integral therewith tends to shift from its position of stable equilibrium, illustrated in Fig.3, through the thrust of the transverse pressure roller 25 on the surface with double inclination 23 the elastic force of the preloaded springs 29 tends to return the internal frame 5 to its position of stable equilibrium, median between the end positions defined by the shock absorbers 35, 37.

In substance, as soon as the stress or a series of stresses tends to shift the internal frame 5 toward a limit stop defined by one or by the other of the shock absorbers 35, 37 along the optical axis A-A, the surface with double inclination 23 generates a force on the transverse pressure roller 25 that is almost constant, given the considerable preload, the reaction of which is such, after the stress that caused the displacement has terminated, to return the internal frame 5 to the original intermediate position of stable equilibrium, i.e. that in which the transverse pressure roller 25 is tangent to the two portions 23A, 23B of the surface with double inclination 23, position in which the internal frame 5 with the video camera 7 is equidistant with respect to the shock absorbers 35 and 37.

Adjustment of the pressure of the sliding shoes 3C against the sliding surfaces 5C of the internal frame 5 makes it possible to establish the maximum acceleration transmissible to the element reciprocating along the axis A-A, by defining the amount of the sliding friction. Moreover, the mechanism for returning the internal frame 5 containing the video camera 7 to the median position with respect to the external frame 3 is able to prevent the onset of phenomena of axial elastic resonance, as the return force by the roller is practically constant along the path, being mainly due to the preload of the springs 29.

The friction forces in play on the friction or sliding surfaces described above and the return force exerted by the transverse pressure roller 25 must be calculated and verified on the basis of the maximum stresses that can be transmitted to the video camera 7. In particular, from a theoretic/design viewpoint, it is possible to act on the following parameters:

- the choice of the kind of the friction, sliding and rolling contacts;

- the choice of appropriate values for the preload and rigidity of the elastic members present, in particular the springs 15 and the springs 29;

- the choice of the inclination of the two portions 23A, 23B of the surface with double inclination 23.

In particular, $A_{maxX}$ being the maximum acceleration to be transmitted to the internal frame 5 and therefore to the video camera 7, the choice of the design parameters is bound by the following relation:

$$A_{max,X} = [2 \cdot N \cdot \mu \cdot _{spring,shoe} + 2 \cdot (\mu + \tan\alpha) \cdot (F_{spring,roller} + k \cdot \Delta x \cdot \tan\alpha) +$$

$$C_{friction,roller}/(\cos\alpha \cdot R_{roller}) + 2 \cdot \tan\alpha \cdot \mu_{roller} \cdot (F_{spring,roller} + k \cdot \Delta x \cdot \tan\alpha)]/M_{FI}$$

where:

N is the total number of springs 15 that act upon the friction shoes 3C,
$\mu$ is the static friction coefficient between the internal frame 5 and the external frame and between the internal frame and the friction shoes 3C,
$F_{spring, shoe}$ is the force with which each spring 15 acting on the friction shoes 3C is preloaded,
$F_{spring, roller}$ is the force with which each spring 29 acting on the transverse pressure roller 25 in the position of equilibrium is preloaded,
k is the rigidity of each spring 29 acting on the transverse pressure roller 25,
$\Delta x$ is the maximum displacement along the axis A-A that can be obtained between external frame 3 and internal frame 5, said displacement being caused by the stresses transmitted to the external frame 3,
$\alpha$ is the inclination of the surface with double inclination 23,
$C_{friction, roller}$ is the rolling friction torque acting on the transverse pressure roller 25, $R_{roller}$ is the radius of the transverse pressure roller 25,
$\mu_{roller}$ is the friction coefficient between guide bushing 27A and guide bar 31,
$M_{FI}$ is the total mass of the internal frame 5 inclusive of the mass of the video camera 7.

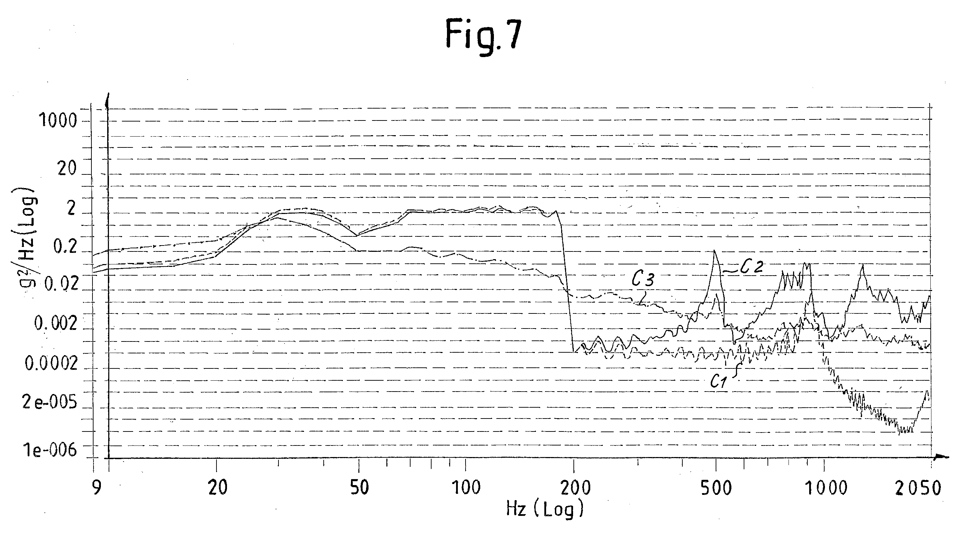

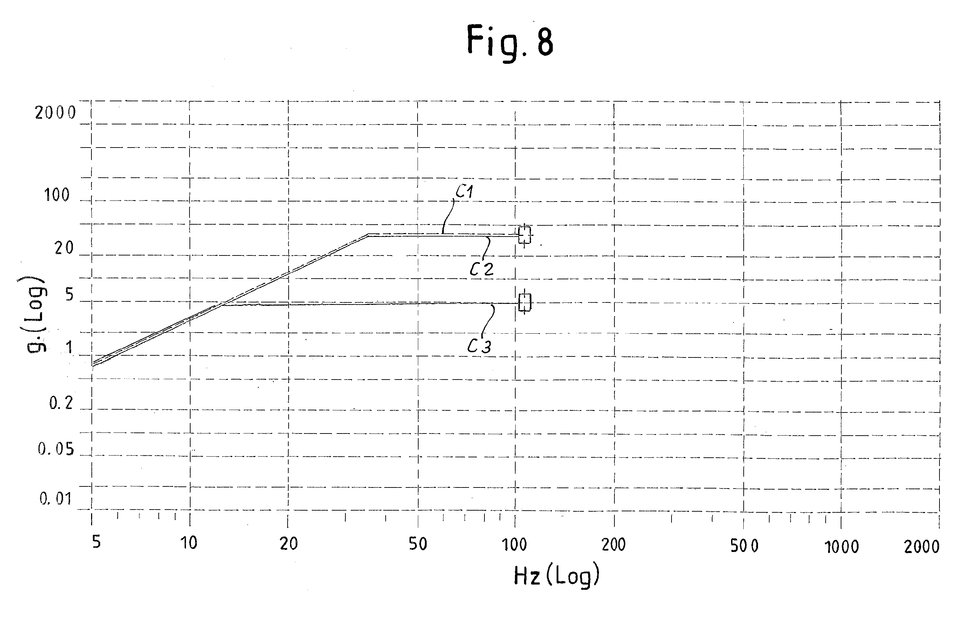

Figs.7 and 8 represent the result of some experimental tests carried out on a system designed as shown in Figs. 2 to 6.
More in particular, Fig.7 shows a graph indicating in the abscissa the frequency of the dynamic stress applied to the external frame 5 through a vibrating table, and in the ordinate the acceleration measured by three accelerometers mounted respectively:

-   on the vibrating table (control accelerometer), curve C1;
-   on the external frame 3, curve C2;
-   on the internal frame 5, curve C3.

In relation to a random stress curve having an effective value (RMS) of 18g applied to the external frame 3 along the axis A-A, the internal frame 5 and therefore the video camera 7 are subjected to an effective stress value of 7g.
The f Fig.8 illustrates the response of the internal frame 5 in relation to a sweep of sinusoidal acceleration stresses having a peak value increasing up to 27g. The abscissa indicates the frequency of the vibration, the ordinate the acceleration, again measured with the three accelerometers indicated above. It must be noted that the internal frame 5 is always subjected to a maximum stress of 5g regardless of the amplitude (first section of the curve up to 35 Hz) and of the frequency of the stress (second section of the curve up to 100 Hz). Also in this case the curve C1 represents the control accelerometer reading on the vibrating table, the curve C2 represents the accelerometer reading on the external frame 3 and the curve C3 represents the accelerometer reading on the internal frame 5.
While particular embodiments of the invention have been described in the foregoing with reference to the accompanying drawings, those skilled in the art will understand that many modifications, changes, additions and omissions are possible without materially departing from the innovative teachings, from the principles and from the concepts set forth above, and from the advantages of the subject matter defined in the appended claims. Therefore, the effective scope of the innovations described must be determined only on the basis of the widest interpretation of the appended claims. Any reference numbers in the appended claims are provided to facilitate reading of the claims with reference to the description and to the drawing, and do not limit the scope of protection represented by the claims. The term "comprising" does not exclude the presence of further elements or steps besides those listed in a claim. The term "a" preceding an element or characteristic does not exclude the presence of a plurality of these elements or characteristics. The term "means" used more than once in a claim does not exclude the possibility that two or more of these means can be implemented through a single element or component. The fact that given characteristics, elements or components are cited in separate dependent claims does not exclude the possibility of at least some of these characteristics, elements or components being used in combination with one another.

**Claims**

1. A vision and/or sighting system (1; 101) comprising: a video camera (7; 107) with an optical axis (A-A); an internal frame (5; 105) containing the video camera (7; 107); and an external frame (3; 103) in which the internal frame (5; 105) is supported; wherein: between the external frame (3; 103) and the internal frame (5; 105) members for reducing mechanical stresses transmitted by the external frame (3; 103) to the internal frame (5; 105) are arranged; **characterized in that** said internal frame (5; 105) is supported in the external frame (3; 103) so as to be able to translate along a direction parallel to the optical axis (A-A) of said video camera (7; 107); a return mechanism (122) is provided for returning the internal frame (5; 105) toward an intermediate position of stable equilibrium of the internal frame (5; 105) with respect to the external frame (3; 103), said return mechanism (122) comprising a pressure member (25; 128), biased by an elastic member (29; 130) against a surface (23, 124) with double inclination, said pressure member (25; 128) being constrained to one of said external frame (3;103) and said internal frame (5;105) and said surface (23; 124) with double inclination being constrained to the other of said internal frame (5; 105) and external frame (3; 103).

2. The system (1; 101) of claim 1, wherein said pressure member is a pressure roller (25; 128).

3. The system (1; 101) as claimed in claim 2, wherein said pressure roller (25; 128) is supported idle on a rotation axis (B-B) inclined by about 90° with respect to the optical axis (A-A) of the video camera (7; 107), integral with the internal frame (5; 105), the surface (23; 124) with double inclination being configured and oriented so that the elastic stress of the pressure roller (25; 128) generates on the surface (23; 124) with double inclination a thrust tending to move the internal frame (5; 105) to said position of stable equilibrium.

4. The system (1; 101) as claimed in claim 3, wherein said surface (23; 124) with double inclination and said pressure roller (25; 128) are configured so as to generate a substantially constant thrust and therefore such as not to trigger axial oscillations of elastic type.

5. The system (1; 101) as claimed in any one of the preceding claims, wherein said surface (23; 124) with double inclination is substantially V-shaped, in the position of stable equilibrium the pressure member (25; 128) being positioned in the vertex of the V-shaped surface.

6. The system (1; 101) as claimed in one or more of claims 1 to 5, wherein said pressure member (25; 128) and said surface (23; 124) with double inclination are arranged so as to stress the internal frame (5; 105) against a sliding surface (3B) of the external frame (3; 103).

7. The system (1; 101) as claimed in any one of the preceding claims, wherein said members for reducing mechanical stresses are configured for reducing the mechanical stress transmitted by the external frame (3; 103) to the internal frame (5; 105) in the direction of the optical axis (A-A).

8. The system(1; 101) as claimed in claim any one of the preceding claims, wherein said members for reducing mechanical stresses comprise shock absorbers (35, 37; 108, 110) between the external frame (3; 103) and the internal frame (5; 105), configured and arranged to absorb the shock between the internal frame (5; 105) and the external frame (3; 103), when the internal frame (5; 105) accidentally translates too far with respect to the external frame (3; 103) along the direction parallel to the optical axis (A-A)of the video camera (7; 107).

9. The system (1; 101) as claimed in claim 8, wherein in said position of stable equilibrium the internal frame (5; 105) is spaced from said shock absorbers (35, 37; 108, 110), which are positioned in front of and behind the internal frame (5; 105) with respect to the direction of the optical axis (A-A) of the video camera (7; 107).

10. The system (1; 101) as claimed in one or more of the preceding claims, wherein said external frame (3; 103) and said internal frame (5; 105) comprise sliding surfaces (5A, 5B, 5C; 118) of the internal frame (5; 105) on the external frame (3; 103), configured to enable sliding of the internal frame (5; 105) with respect to the external frame (3; 103) parallel to the optical axis (A-A) of the video camera (7; 107).

11. The system (1; 101) as claimed in claim 10, comprising members (15, 17) to adjust the friction force between the external frame (3; 103) and the internal frame (5; 105).

12. The system (1; 101) as claimed in one or more of the preceding claims, wherein between said external frame (3;

103) and said internal frame (5; 105) there are interposed sliding shoes (3C; 116), configured and arranged to enable sliding of the internal frame (5; 105) with respect to the external frame (3; 103) parallel to the optical axis (A-A) of the video camera (7; 107), said sliding shoes (3C; 116) being associated with elastic members (15; 120) that generate an elastic thrust of the sliding shoes against respective sliding surfaces (5C; 118).

13. The system (1; 101) as claimed in claim 12, wherein said sliding shoes (3C; 116) and said elastic members (15; 120) are arranged and configured to enable a displacement of the internal frame (5; 105) with respect to the external frame (3; 103) in a transverse direction with respect to the optical axis (A-A) of the video camera (7; 107), said displacement in transverse direction being opposed by the thrust generated by said elastic members (15; 120) associated with the shoes (3C; 116).

14. The system (1; 101) as claimed in claim 12 or 13, wherein said sliding shoes (3C; 116) are integral with the external frame (3; 103) and are elastically stressed against said sliding surfaces (5C; 118), which are integral with the internal frame (5; 105).

15. The system as claimed in one or more of claims 12 to 14, wherein: said internal frame (5; 105) and said external frame (3; 103) are in mutual contact at two mutually orthogonal faces, defining sliding surfaces parallel to the optical axis (A-A) of the video camera (7; 107), said sliding shoes (3C; 116) being arranged at one of said faces, and wherein the elastic thrust of the sliding shoes (3C; 116) is oriented in a direction substantially orthogonal to the optical axis (A-A) of the video camera (7; 107) and to a thrust generated by the elastic member (29; 130) of the return mechanism.


**Patentansprüche**

1. Video- und/oder Sichtsystem (1, 101) mit einer Videokamera (7, 107) mit einer optischen Achse (A-A), einem internen Rahmen (5, 105) mit der Videokamera (7, 107) und einem externen Rahmen (3, 103), in dem der interne Rahmen (5, 105) getragen wird, wobei: zwischen dem externen Rahmen (3, 103) und den internen Rahmen (5, 105) Elemente zur Reduktion von mechanischen Beanspruchungen, die durch den externen Rahmen (3, 103) an den internen Rahmen (5, 105) übertragen werden, angeordnet sind, **dadurch gekennzeichnet, dass** der interne Rahmen (5, 105) in dem externen Rahmen (3, 103) so getragen ist, dass er sich entlang einer Richtung parallel zu der optischen Achse (A-A) der Videokamera (7, 107) bewegen kann, wobei ein Rückführmechanismus (122) vorgesehen ist, um den internen Rahmen (5, 105) zu einer Zwischenposition eines stabilen Gleichgewichts des internen Rahmens (5, 105) mit Bezug auf den externen Rahmen (3, 103) zurückzuführen, wobei der Rückführmechanismus (122) ein Druckelement (25, 128) aufweist, das durch ein elastisches Element (29, 130) gegen eine Fläche (23, 124) mit doppelter Neigung vorgespannt ist, wobei das Druckelement (25, 128) mit einem von dem externen Rahmen (3, 103) und dem internem Rahmen (5, 105) verbunden ist und die Fläche (23, 124) doppelter Neigung mit dem anderen von dem internen Rahmen (5, 105) und dem externen Rahmen (3, 103) verbunden ist.

2. System (1, 101) nach Anspruch 1, wobei das Druckelement eine Druckwalze (24, 128) ist.

3. System (1, 101) nach Anspruch 2, wobei die Druckwalze (25, 128) freilaufend auf einer Drehachse (B-B) getragen ist, die um etwa 90° mit Bezug auf die optische Achse (A-A) der Videokamera (7, 107) geneigt ist, die integral mit dem Innenrahmen (5, 105) ist, wobei die Fläche (23, 124) mit doppelter Neigung so ausgebildet und orientiert ist, dass die elastische Beanspruchung der Druckwalze (24, 128) an der Fläche (23, 124) mit doppelter Neigung einen Schub erzeugt, der dazu tendiert, den inneren Rahmen (5, 105) zu der Position des stabilen Gleichgewichts zu bewegen.

4. System (1, 101) nach Anspruch 3, wobei die Fläche (23, 124) mit doppelter Neigung und die Druckwalze (25, 128) so ausgebildet sind, dass sie einen im wesentlichen konstanten Schub erzeugen und somit keine axiale Oszillationen des elastischen Typs erzeugen.

5. System (1, 101) nach einem der vorstehenden Ansprüche, wobei die Fläche (23, 124) mit doppelter Neigung im wesentlichen V-förmig ist; wobei in der Position des stabilen Gleichgewichts das Druckelement (24, 128) in der Spitze der V-förmigen Fläche angeordnet ist.

6. System (1, 101) nach einem oder mehreren der Ansprüche 1 bis 5, wobei das Druckelement (25, 128) und die Fläche (23, 124) mit doppelter Neigung so angeordnet sind, dass sie den internen Rahmen (5, 105) gegen eine Gleitfläche (3B) des externen Rahmens (3, 103) belasten.

**7.** System (1, 101) nach einem der vorstehenden Ansprüche, wobei die Elemente zur Reduktion von mechanischer Beanspruchung zur Reduktion der mechanischen Beanspruchung ausgebildet sind, die durch den externen Rahmen (3, 103) auf den internen Rahmen (5, 105) in der Richtung der optischen Achse (A-A) übertragen wird.

**8.** System (1, 101) nach einem der vorstehenden Ansprüche, wobei die Elemente zur Reduktion von mechanischer Beanspruchung Stoßdämpfer (35, 37, 108, 110) zwischen dem externen Rahmen (3, 103) und dem internen Rahmen (5, 105) aufweisen, die ausgebildet und angeordnet sind, um den Stoß zwischen dem internen Rahmen (5, 105) und dem externen Rahmen (3, 103) zu absorbieren, wenn der interne Rahmen (5, 105) sich versehentlich zu weit mit Bezug auf den externen Rahmen (3, 103) entlang der Richtung parallel zu der optischen Achse (A-A) der Videokamera (7, 107) bewegt.

**9.** System (1, 101) nach Anspruch 8, wobei in der Position des stabilen Gleichgewichts der interne Rahmen (5, 105) von den Stoßdämpfern (35, 37; 108, 110) beabstandet ist, die vor und hinter dem internen Rahmen (5, 105) mit Bezug auf die Richtung der optischen Achse (A-A) der Videokamera (7, 107) angeordnet sind.

**10.** System (1, 101) nach einem der vorstehenden Ansprüche, wobei der externe Rahmen (3, 103) und der interne Rahmen (5, 105) Gleitflächen (5A, 5B, 5 C; 118) des internen Rahmens (5, 105) an dem externen Rahmen (3, 103) aufweisen, die ausgebildet sind, um ein Gleiten des internen Rahmens (5, 105) mit Bezug auf den externen Rahmen (3, 103) parallel zu der optischen Achse (A- A) der Videokamera (7, 107)zu ermöglichen.

**11.** System (1, 101) nach Anspruch 10 mit Elementen (15, 17) zur Einstellung der Reibungskraft zwischen dem externen Rahmen (3, 103) und dem internen Rahmen (5, 105).

**12.** System (1, 101) nach einem oder mehreren der vorstehenden Ansprüche, wobei zwischen den externen Rahmen (3,103) und den internen Rahmen (5, 105) Gleitschuhe (3C, 116) zwischengefügt sind, die ausgebildet und angeordnet sind, um ein Gleiten des internen Rahmens (5, 105) mit Bezug auf den externen Rahmen (3, 103) parallel zu der optischen Achse (A-A) der Videokamera (7, 107) zu ermöglichen, wobei die Gleitschuhe (3C, 116) elastischen Elementen (15, 120) zugeordnet sind, die einen elastischen Schub der Gleitschuhe mit Bezug auf Gleitflächen (5C, 118) erzeugen.

**13.** System (1, 101) nach Anspruch 12, wobei die Gleitschuhe (3C, 116) und die elastischen Elemente (15, 120) angeordnet und ausgebildet sind, um eine Verlagerung des internen Rahmens (5, 105) mit Bezug auf den externen Rahmen (3, 103) in einer Querrichtung mit Bezug auf die optische Achse (A-A) der Videokamera (7, 107) zu ermöglichen, wobei der Verlagerung in Querrichtung durch den Schub, der durch die elastischen Elemente (15, 120), die den Schuhen (3 C, 116) zugeordnet sind, entgegengewirkt wird.

**14.** System (1, 101) nach Anspruch 12 oder 13, wobei die Gleitschuhe (3 C, 116) integral mit dem externen Rahmen (3, 103) sind und elastisch gegen die Gleitflächen (5C, 118), die integral mit dem internen Rahmen (5, 105) sind, belastet sind.

**15.** System nach einem oder mehreren der Ansprüche 12 bis 14, wobei der interne Rahmen (5, 105) und der externe Rahmen (3, 103) in gegenseitigem Kontakt mit zwei orthogonalen Flächen sind, die Gleitflächen parallel zu der optischen Achse (A-A) der Videokamera (7, 107) definieren, wobei die Gleitschuhe (3C, 116) an einer der Flächen angeordnet sind und wobei der elastische Schub der Gleitschuhe (3C, 116) in einer Richtung im wesentlichen orthogonal zu der optischen Achse (A-A) der Videokamera (7, 107) und zu einem Schub, der durch die elastischen Elemente (29, 130) des Rückführmechanismus erzeugt wird, orientiert ist.


**Revendications**

**1.** Un système de vision et/ou de visée (1 ; 101) comprenant : une caméra vidéo (7 ; 107) ayant un axe optique (A-A) ; un cadre interne (5 ; 105) contenant la caméra vidéo (7 ; 107) ; et un cadre externe (3 ; 103) dans lequel le cadre interne (5 ; 105) est supporté ; dans lequel : entre le cadre externe (3 ; 103) et le cadre interne (5 ; 105) sont agencés des organes pour réduire les contraintes mécaniques transmises par le cadre externe (3 ;103) au cadre interne (5 ; 105) ; **caractérisé en ce que** ledit cadre interne (5 ; 105) est supporté dans le cadre externe (3 ; 103) de manière à être capable de se déplacer le long d'une direction parallèle à l'axe optique (A-A) de ladite caméra vidéo (7 ; 107) ; un mécanisme de retour (122) est prévu pour faire revenir le cadre intérieur (5, 105) vers une position intermédiaire d'équilibre stable du cadre interne (5 ; 105) par rapport au cadre externe (3 ; 103), ledit mécanisme de retour (122) comprenant un organe de pression (25 ; 128), appliqué par un organe élastique (29 ; 103) sur une surface (23, 124) à double inclinaison, ledit organe de pression (25 ; 128) étant contraint sur l'un desdits cadre externe (3 ; 103) et cadre interne (5 ; 105) et ladite surface (23 ; 124) à double inclinaison étant contrainte sur l'autre desdits cadre interne (5 ; 105) et cadre externe (3 ; 103).

2. Le système (1 ; 101) selon la revendication 1, dans lequel ledit organe de pression est un rouleau de pression (25 ; 128).

3. Le système (1 ; 101) selon la revendication 2, dans lequel ledit rouleau de pression (25 ; 128) est monté fou sur un axe de rotation (B-B) incliné à environ 90 degrés par rapport à l'axe optique (A-A) de la caméra vidéo (7 ; 107), d'un seul tenant avec le cadre interne (5 ; 105), la surface (23 ; 124) à double inclinaison étant configurée et orientée de telle sorte que la contrainte élastique du rouleau de pression (25 ; 128) génère sur la surface (23 ; 124) à double inclinaison une poussée tendant à déplacer le cadre interne (5 ; 105) vers ladite position d'équilibre stable.

4. Le système (1 ; 101) selon la revendication 3, dans lequel ladite surface (23 ; 124) à double inclinaison et ledit rouleau de pression (25 ; 128) sont configurés de manière à générer une poussée sensiblement constante et par conséquent de manière à ne pas provoquer d'oscillations axiales de type élastique.

5. Le système (1 ; 101) selon l'une quelconque des revendications précédentes, dans lequel ladite surface (23 ; 124) à double inclinaison est sensiblement en forme de V, dans la position d'équilibre stable, l'organe de pression (25 ; 128) étant positionné au sommet de la surface en forme de V.

6. Le système (1 ; 101) selon une plusieurs des revendications 1 à 5, dans lequel ledit organe de pression (25 ; 128) et ladite surface (23 ; 124) à double inclinaison sont agencés de manière à contraindre le cadre interne (5 ; 105) contre une surface de glissement (3B) du cadre externe (3 ; 103).

7. Le système (1 ; 101) selon l'une quelconque des revendications précédentes, dans lequel lesdits organes de réduction des contraintes mécaniques sont configurés pour réduire la contrainte mécanique transmise par le cadre externe (3 ; 103) au cadre interne (5 ; 105) dans la direction de l'axe optique (A-A).

8. Le système (1 ; 101) selon l'une quelconque des revendications précédentes, dans lequel lesdits organes de réduction des contraintes mécaniques comprennent des absorbeurs de choc (35, 37 ; 108, 110) entre le cadre externe (3 ; 103) et le cadre interne (5 ; 105), configurés et agencés pour absorber le choc entre le cadre interne (5 ; 105) et le cadre externe (3 ; 103), lorsque le cadre interne (5 ; 105) se déplace accidentellement trop loin par rapport au cadre externe (3 ; 103) le long de la direction parallèle à l'axe optique (A-A) de la caméra vidéo (7 ; 107).

9. Le système (1 ; 101) selon la revendication 8, dans lequel dans ladite position d'équilibre stable, le cadre interne (5 ; 105) est espacé par rapport auxdits absorbeurs de choc (35, 37 ; 108, 110), qui sont positionnés en face de et derrière le cadre interne (5 ; 105) par rapport à la direction de l'axe optique (A-A) de la caméra vidéo (7 ; 107).

10. Le système (1 ; 101) selon une ou plusieurs des revendications précédentes, dans lequel ledit cadre externe (3 ; 103) et ledit cadre interne (5 ; 105) comprennent des surfaces de glissement (5A, 5B, 5C ; 118) du cadre interne (5 ; 105) sur le cadre externe (3 ; 103), configurées pour permettre le glissement du cadre interne (5 ; 105) par rapport au cadre externe (3 ; 103) parallèlement à l'axe optique (A-A) de la caméra vidéo (7 ; 107).

11. Le système (1 ; 101) selon la revendication 10, comprenant des organes (15, 17) pour ajuster la force de friction entre le cadre externe (3 ; 103) et le cadre interne (5 ; 105).

12. Le système (1 ; 101) selon une ou plusieurs des revendications précédentes, dans lequel, entre ledit cadre externe (3 ; 103) et ledit cadre interne (5 ; 105) sont interposés des patins glissants (3C ; 116), configurés et agencés pour permettre un glissement du cadre interne (5 ; 105) par rapport au cadre externe (3 ; 103) parallèlement à l'axe optique (A-A) de la caméra vidéo (7 ; 107), lesdits patins glissants (3C, 116) étant associés à des organes élastiques (15 ; 120) qui génèrent une poussée élastique des patins glissants par rapport aux surfaces de glissement respectives (5C ; 118).

13. Le système (1 ; 101) selon la revendication 12, dans lequel lesdits patins glissants (3C ; 116) et lesdits organes élastiques (15 ; 120) sont agencés et configurés pour permettre un déplacement du cadre interne (5 ; 105) par rapport au cadre externe (3 ; 103) dans une direction transversale par rapport à l'axe optique (A-A) de la caméra vidéo (7 ; 107), ledit déplacement en direction transversale étant opposé à la poussée générée par lesdits organes élastiques (15 ; 120) associés auxdits patins (3C ; 116).

14. Le système (1 ; 101) selon la revendication 12 ou 13, dans lequel lesdits patins glissants (3C ; 116) sont d'un seul tenant avec le cadre externe (3 ; 103) et sont contraints de manière élastique contre lesdites surfaces de glissement (5C ; 118), lesquelles sont d'un seul tenant avec la cadre interne (5 ; 105).

15. Le système selon une ou plusieurs des revendications 12 à 14, dans lequel : ledit cadre interne (5 ; 105) et ledit cadre externe (3 ; 103) sont en contact mutuel au niveau de deux faces orthogonales l'une par rapport à l'autre, formant des surfaces de glissement parallèles à l'axe optique (A-A) de la caméra vidéo (7 ; 107), lesdits patins glissants (3C ; 116) étant agencés sur l'une desdites faces, et dans lequel la poussée élastique des patins glissants (3C ; 116) est orientés dans une direction sensiblement orthogonale à l'axe optique (A-A) de la caméra vidéo (7 ; 107) et à une poussée générée par l'organe élastique (29 ; 130) du mécanisme de retour.

Fig. 1

Fig.2

EP 2 891 009 B1

# Fig.6

# Fig.3

Fig.5

Fig.4

Fig.7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 200601216019 A